# EUROPÄISCHE PATENTSCHRIFT

(11) **EP 2 710 725 B1**
(45) Veröffentlichungstag und Bekanntmachung des Hinweises auf die Patenterteilung: **28.10.2015**
(21) Anmeldenummer: 12729850.3
(22) Anmeldetag: 10.05.2012
(51) Int. Cl.: H02N 2/00, H02N 2/06, H02M 7/5381

(54) **INVERTER**
INVERTER
ONDULEUR

(30) Priorität: 17.05.2011 DE 102011075985
(43) Veröffentlichungstag der Anmeldung: 26.03.2014
(73) Patentinhaber: Physik Instrumente (PI) GmbH & Co. KG, 76228 Karlsruhe (DE)
(72) Erfinder: WISCHNEWSKIY, Wladimir, 14712 Rathenow (DE); WISCHNEWSKIJ, Alexej, 76744 Wörth (DE)
(74) Vertreter: Schatt, Markus F.
(86) Internationale Anmeldenummer: PCT/DE2012/200031
(87) Internationale Veröffentlichungsnummer: WO 2012/155903

(56) Entgegenhaltungen:
- DE-T2- 69 838 991
- US-A- 4 415 963
- US-A1- 2008 055 952
- DU S ET AL: "A novel soft-switching two-stage step-up DC/DC converter", PROC. OF THE 7TH INTERNATIONAL CONFERENCE ON POWER ELECTRONICS, ICPE '07, IEEE, 2007, PISCATAWAY, NJ, USA, 22. Oktober 2007 (2007-10-22), Seiten 602-607, XP031367134, DOI: 10.1109/ICPE.2007.4692459 ISBN: 978-1-4244-1871-8

## Beschreibung

Die Erfindung betrifft einen getakteten Inverter einer elektrischen Spannung für einen Ultraschallmotor.

Ein getakteter Inverter einer elektrischen Spannung kann als elektrische Erregervorrichtung von Ultraschallaktoren leistungsstarker Ultraschallmotoren eingesetzt werden. Die elektrische Erregervorrichtung kann weiterhin in elektrischen Spannungserregervorrichtungen für piezoelektrische Transformatoren, in Erregereinrichtungen für piezoelektrische Wandler in Ultraschallschweißapparaten, in Erregereinrichtungen piezoelektrischer Wandler in Ultraschallbohr- und Frasmaschinen, in Erregervorrichtungen von Ultraschallwannen und Ähnlichem Anwendung finden.

Aus der DE 10 2004 059 429 B4 ist eine elektrische Erregervorrichtung für die Erregung eines Ultraschallaktors in einem Ultraschallmotor bekannt, in welcher ein Inverter für eine elektrische Spannung verwendet wird, der einen als Stromschalter ausgeführten Leistungsverstärker enthalt. In diesem Inverter wird die Stromquelle durch eine Speicherspule gebildet, die mit einem Schalter mit einer Gleichspannungsquelle oder mit dem Ultraschallaktor des Ultraschallmotors verbunden wird.

Der Nachteil dieses Inverters besteht darin, dass er eine asymmetrische elektrische Spannung bereitstellt, die die Form einer halben Sinuskurve hat. Diese Spannung enthalt eine hohe Zahl harmonischer Anteile, was die Funktion des Friktionskontaktes des Ultraschallmotors verschlechtert.

In der Veröffentlichung "A novel soft-switching two-stage step-up DC/DC converter" von S.DU, PROC. IEEE ICPE 07 Konferenz, Daegu, 22. Oktober 2007, Seiten 602 bis 607, ist eine getaktete Treiberschaltung für eine elektrisch Spannung beschrieben.

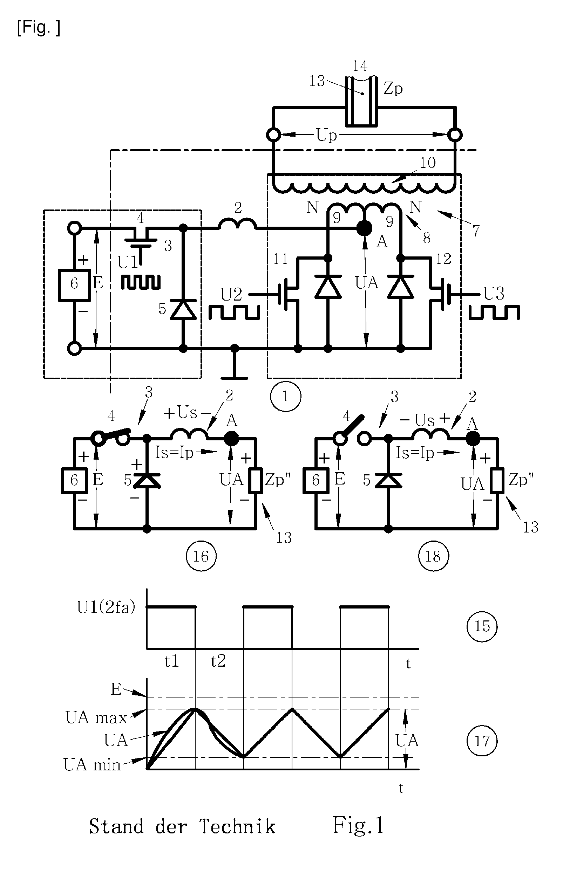

Weiterhin ist aus der DE 698 38 991 T2 eine elektrische Erregervorrichtung für einen Aktor eines Ultraschallmotors, die einen getakteten Inverter für eine elektrische Spannung enthält. Darstellung 1 von Fig. 1 zeigt die elektrische Schaltung für den entsprechenden Inverter.

Dieser Inverter umfasst eine Speicherspule 2, einen Umschalter 3 für den Strom der Speicherspule 2, der aus einem Schalter 4 und einer Diode 5 besteht, und eine Gleichspannungsquelle 6 mit der Spannung E. Ferner umfasst der Inverter einen Summierungstransformator 7 mit einer Primarwicklung 8, bestehend aus zwei gleichen Sektionen 9, und einer Sekundärwicklung 10.

Die gegenphasigen Ausgänge der Sektionen 9 der Primärwicklung 8 sind mit getakteten Schaltern 11 und 12 verbunden. Die anderen Ausgänge der Sektionen 9 bilden den Mittelanschluss A der Primärwicklung 8. Die Ausgänge der Sekundärwicklung 10 sind mit dem Ultraschallaktor 13 eines Ultraschallmotors 14 verbunden, der die aus der Eingangskapazität und dem Wirkwiderstand gebildete elektrische Impedanz Zp aufweist.

Der Transformationskoeffizient N des Summierungstransformators 7 ergibt sich aus dem Verhältnis der Windungszahl der Sekundärwicklung 10 zur Windungszahl einer der Sektionen 9 der Primärwicklung 8.

Im Betrieb des Inverters wird an die Steuerelektrode des Schalters 4 die rechteckige Steuerspannung U1 angelegt, deren Frequenz gleich 2fa ist, wobei fa die Arbeitsfrequenz des Aktors 13 ist (siehe Darstellung 15 von Fig. 1). An die Steuerelektroden der Schalter 11 und 12 werden die zwei gegenphasig getakteten Rechteckspannungen U2 und U3 angelegt, deren Frequenz fa ist.

Während der Zeit t1, in welcher der Spannungsimpuls U1 anliegt, ist der Schalter 4 - abgebildet in Darstellung 16 von Fig. 1 - geschlossen. Durch die Speicherspule 2 fließt der Ladestrom Is, der gleich dem über Zp" fließenden Strom Ip ist. Die Impedanz Zp" stellt die Impedanz Zp des Aktors 13 dar, zusammengeführt im Punkt A, wobei Zp" = Zp/N² ist.

Durch den durch die Spule 2 fließenden Strom Is tritt an ihr ein Spannungsabfall Us auf. Diese Spannung Us ist von der Spannung E abzuziehen, wodurch am Punkt A die Spannung UA anliegt.

Nach dem Schließen des Schalters 4 beginnt die Spannung an der Speicherspule 2 exponentiell anzusteigen (siehe Darstellung 17 von Fig. 1). Der Anstieg der Spannung Us erfolgt bis zur Spannung UA max, die stets kleiner als E ist.

Während der Zeit t1 ist die Diode 4 - bezogen auf die Spannung E - in Sperrrichtung geschaltet. Das bedeutet, dass über die Diode in der Zeit t1 kein Strom fließt.

Während der Zeit t2 ist der Schalter 4 gemäß Darstellung 18 von Fig. 1 geöffnet. Im Moment des Öffnens des Schalters 4 ändert die Spannung Us augenblicklich ihre Polarität. Die Speicherspule 2 wird zur Quelle für die Selbstinduktionsspannung Us. Das führt dazu, dass sich die Polarität der an der Diode 5 anliegenden Spannung umkehrt (siehe auch Darstellung 18 von Fig. 1). Die Diode 4 ist in Durchlassrichtung geschaltet, weshalb durch sie der Entladestrom Is der Speicherspule 2 fließt, der gleich dem Strom Ip ist.

Die Speicherspule 2 beginnt ihre gespeicherte Energie an die Last Zp" abzugeben. Dadurch beginnt sich die Spannung UA exponentiell auf den Spannungswert UA min zu verringern (siehe auch Darstellung 17 von Fig. 1). Danach trifft der zweite Spannungsimpuls U1 ein und der Prozess wiederholt sich.

Durch das Umschalten der Schalter 11 und 12 der gegenphasigen Sektionen 9 des Transformators 7 mit der Frequenz fa überlagern sich die zwei Halbwellen der Spannung UA in der Sekundärwicklung 10. Deshalb bildet sich in der Sekundärwicklung 10 die Wechselspannung Up, deren Frequenz gleich fa ist und deren Form in der ersten und zweiten Halbperiode gleich 1/2fa ist. Dabei ist die Amplitude der Spannungshalbwellen Up gleich UA max und -UA max. Die Spannung Up enthält weniger Harmonische als die Spannung des Inverters gemäß der DE 102004059429 B4, was für den Betrieb des Ultraschallmotors vorteilhaft ist.

Ein Nachteil des Inverters nach der DE 698 38 991 T2 besteht darin, dass die Amplitude UA max stets kleiner als die Spannung E der Gleichspannungsquelle 6 ist. Dies hängt damit zusammen, dass sich im Moment des Ladens die Speicherspule 2 durch den Strom Is auflädt, der gleich dem Strom Ip ist, d.h. der Ladestrom Is der Speicherspule 2 wird durch den Lastwiderstand Zp" (Zp) begrenzt. Im Verhältnis zur Spannung E der Gleichspannungsquelle 6 erhöht die Speicherspule 2 nicht die Amplitude der Spannung UA an der Last Zp" (Zp), sondern senkt diese Amplitude.

Ausgehend von diesen Darlegungen ergibt sich, dass die auf die Sekundärwicklung 10 des Transformators 7, d.h. auf die Last Zp einwirkende Amplitude der Spannung Up, annähernd gleich NE ist. Deshalb kann die im Inverter entsprechend der DE 698 38 991 T2 notwendige Erhöhung der Spannung nur durch Erhöhung des Transformationskoeffizienten N des Transformators 7 erfolgen.

Die Aktoren in Ultraschallleistungsmotoren benötigen hohe Erregerspannungen Up mit Spannungswerten von 150 - 300 Volt, wobei die Frequenz fa 50 - 200 KHz beträgt. Zur Spannungsversorgung der Erregervorrichtungen dieser Motoren wird eine Gleichspannung E zu 12 V verwendet. Wird in ihm ein Inverter entsprechend der DE 698 38 991 T2 verwendet, muss infolgedessen ein Summierungstransformator 7 mit einem Transformationskoeffizienten N von 12,5 - 25 oder höher eingesetzt werden.

Transformatoren mit solchen Transformationskoeffizienten N besitzen eine große Zahl von Wicklungen in der Sekundärwicklung 10. Deshalb entsteht zwischen den Wicklungen in ihm eine große Störkapazität, die Werte von 2 - 5 Nanofarad erreicht. Gleichzeitig beträgt die Eingangskapazität (Zp) der Aktoren der Ultraschallleistungsmotoren 1 - 2 Nanofarad. Das bedeutet, dass die parasitäre Kapazität des Transformators 7 in dem Inverter entsprechend der DE 698 38 991 T2 gleich oder um einiges höher als die Kapazität der Last (Zp) ist.

Da die Ultraschallmotoren eine hohe Arbeitsfrequenz haben, erhöht die höhere Störkapazität des Transformators 7 den durch die Primärwicklung 8 fließenden Strom Ip um ein Mehrfaches. Dies führt zur Erwärmung des Transformators 7, zur Erwärmung des Schalters 4 und zur Erwärmung der Gleichspannungsquelle 6.

Die Erwärmung des Inverters führt jedoch zu einer Verschlechterung der Temperatur- und der zeitlichen Betriebsstabilität des Inverters und des Betriebs des Ultraschallmotors.

Außerdem entsteht bei hohen Störkapazitäten des Transformators 7 eine starke Resonanz dieser Kapazität mit der Speicherspule 2. Dadurch entsteht in der Spannung Up eine hochfrequente Harmonische mit großer Amplitude.

Die zuvor aufgeführten Nachteile bei aus dem Stand der Technik bekannten getakteten Invertern bewirken letztlich einen niedrigen Wirkungsgrad der angesteuerten Ultraschallmotoren, was das Einsatzgebiet dieser Inverter deutlich einschränkt.

Daher ist es Ziel der vorliegenden Erfindung, einen getakteten Inverter einer elektrischen Spannung für einen Ultraschallmotor, bereitzustellen, der die oben beschriebenen Nachteile der aus dem Stand der Technik bekannten Inverter einer elektrischen Spannung überwindet. Insbesondere ist es Ziel der Erfindung, einen getakteten Inverter mit einer erhöhten Spannung UA max, einer verringerten Wärmeentwicklung, einer verringerten Amplitude parasitärer Schwingungen und einer verbesserten Zeit- und Temperaturstabilität bereitzustellen.

Die zuvor genannte Aufgabe wird gelöst durch einen getakteten Inverter einer elektrischen Spannung mit den Merkmalen des Anspruchs 1. Vorteilhafte Ausgestaltungen ergeben sich aus den abhängigen Patentansprüchen.

Der erfindungsgemäße getaktete Inverter einer elektrischen Spannung für einen Ultraschallmotor umfasst eine elektrische Gleichspannungsquelle, eine Speicherspule, einen Umschalter für den Strom Is der Speicherspule, einen elektrischen Summierungstransformator mit einer Primär- und einer Sekundärwicklung, einen geregelten Generator und zwei gegenphasige getaktete Schalter. Hierbei ist die Speicherspule über einen ersten Anschluss mit einem ersten Ausgang der elektrischen Gleichspannungsquelle und über einen zweiten Anschluss mit einem Mittelausgang A der Primärwicklung des Summierungstransformators verbunden, und zwei Anschlüsse des Summierungstransformators sind über die gegenphasig getakteten Schalter mit einem zweiten Ausgang der elektrischen Gleichspannungsquelle verbunden, wobei der Umschalter als zweipoliger Schalter ausgeführt ist, der mit einem ersten Anschluss mit dem zweiten Anschluss der Speicherspule und mit einem zweiten Anschluss mit dem zweiten Ausgang der elektrischen Gleichspannungsquelle verbunden ist, und die gegenphasig getakteten Schalter durch von dem geregelten Generator bereitgestellte getaktete elektrische Rechteckspannungen U2, U3 gesteuert werden, deren Frequenz gleich der Arbeitsfrequenz fa des Ultraschallmotors ist, und der Umschalter durch eine von dem geregelten Generator bereitgestellte elektrische Rechteckspannung U1 gesteuert wird, deren Frequenz zweimal größer als die Arbeitsfrequenz fa des Ultraschallmotors ist.

Im erfindungsgemäßen Inverter erfolgt die Erhöhung der durch ihn generierten elektrischen Spannung Up auf Grund der Selbstinduktionsspannung Us der Speicherspule. Dadurch ist es möglich, den Transformationskoeffizienten N des Summierungstransformators zu verringern.

Im Verhältnis zum Inverter gemäß der DE 698 38 991 T2 kann dabei der Transformationskoeffizient N um das 4 bis 8-fache verringert werden. Durch den kleineren Transformationskoeffizient N ist es möglich, die Störkapazität zwischen Wicklungen des Transformators zu verringern. Dies verringert den durch die Primärwicklung des Transformators fließenden Strom Ip um ein Mehrfaches. Ein kleinerer Strom verringert die Erwärmung des Transformators, des Umschalters und der Gleichspannungsquelle.

Die geringere Erwärmung des Inverters bewirkt eine höhere Temperaturstabilität und eine bessere zeitliche Betriebsstabilität des Inverters und damit eine höhere Betriebsstabilität des Ultraschallmotors.

Eine geringere Störkapazität des Transformators erhöht die parasitäre Resonanzfrequenz dieser Kapazität gegenüber der der Speicherspule um ein Mehrfaches. Dies verringert wesentlich die Amplitude der hochfrequenten Harmonischen der Ausgangsspannung Up.

Insgesamt resultiert ein Inverter mit deutlich erhöhtem Wirkungsgrad und damit auch ein im Wirkungsgrad deutlich verbesserter Ultraschallmotor, dessen Einsatzgebiet im Verhältnis zu den aus dem Stand der Technik bekannten Invertern bzw. entsprechenden Ultraschallmotoren wesentlich größer ist.

Erfindungsgemäß ist parallel zur induktiven Speicherspule ein Kondensator geschaltet. Der parallel geschaltete Kondensator erlaubt es, die Spannungsimpulse UA zu strecken.

Es kann auch von Vorteil sein, dass ein Nebenschlusskondensator parallel zur Primärwicklung des Summierungstransformators geschaltet ist. Der Nebenschlusskondensator ermöglicht es, die Amplituden der hochfrequenten parasitären Schwingungen der Spannung UA zu verringern.

Zudem kann es von Vorteil sein, dass parallel zur Sekundärwicklung des Summierungstransformators ein Kompensationskondensator geschaltet ist. Dies ermöglicht die Kompensation der parasitären Induktivität des Summierungstransformators.

Es kann von Vorteil sein, dass der getaktete Inverter einen Rückkopplungskreis aufweist, dessen Eingang mit einem Rückkopplungselement und dessen Ausgang mit dem Steuereingang des getakteten Generators verbunden ist.

Es kann sich als vorteilhaft erweisen, dass das Rückkopplungselement ein Wirkwiderstand oder ein Kondensator ist, und der Wirkwiderstand und/oder der Kondensator parallel oder in Reihe mit der Sekundärwicklung des Summierungstransformators geschaltet sind/ist.

Weiterhin kann es sich als vorteilhaft erweisen, dass das Rückkopplungselement eine Hilfselektrode oder eine freie Elektrode des Aktors des Ultraschallmotors oder ein Hilfspiezoelement ist.

Es kann sich auch als vorteilhaft erweisen, dass ein aus dem getakteten Inverter, einem Ultraschallmotor und dem Rückkopplungskreis mit dem Rückkopplungselement gebildetes System ein PLL-Regler für die Frequenz der getakteten Spannung ist.

Es kann günstig sein, dass zwischen dem Generator der getakteten Signale und dem Steuereingang des Umschalters der Speicherspule ein gesteuerter PWM-Modulator geschaltet ist.

Des Weiteren kann es sich als vorteilhaft erweisen, dass die elektrische Gleichspannungsquelle einen gesteuerten PWM-Wandler aufweist.

Zudem kann es günstig sein, dass der getaktete Inverter einen Geber für die Lage oder für die Bewegungsgeschwindigkeit umfasst und ein mit dem getakteten Inverter verbundener Ultraschallmotor ebenfalls einen Geber für die Lage oder für die Bewegungsgeschwindigkeit umfasst, wobei der Eingang des Gebers des getakteten Inverters mit dem Geber des Ultraschallmotors verbunden ist, und der Ausgang das Gebers des getakteten Inverters mit dem Steuereingang des PWM-Wandlers der elektrischen Spannungsquelle oder mit dem Steuereingang des PWM-Modulators verbunden ist.

Die Erfindung betrifft zudem einen Ultraschallmotor mit einem getakteten Inverter nach einer der zuvor beschriebenen vorteilhaften Ausführungsformen.

Es zeigen in schematischer und nicht notwendigerweise maßstabsgetreuer Weise:
Fig. 1: Darstellung 1: Blockschaltbild eines Inverters nach dem Stand der Technik gemäß DE 698 38 991 T2; Darstellung 15: zeitlicher Verlauf der Spannung U1; Darstellung 16: Ersatzschaltbild zu Darstellung 1 bei geschlossenem Schalter; Darstellung 17: zeitlicher Verlauf der Spannung UA; Darstellung 18: Ersatzschaltbild zu Darstellung 1 bei geöffnetem Schalter.
Fig. 2: Darstellung 19: Blockschaltbild eines nicht-erfindungsgemäßen Inverters mit entsprechend angesteuertem Ultraschallaktor bzw. -motor; Darstellung 29: Ersatzschaltbild zu Darstellung 19 bei geschlossenem Umschalter; Darstellung 30: Ersatzschaltbild zu Darstellung 19 bei geöffnetem Umschalter.
Fig. 3: Darstellungen 31 bis 33: zeitlicher Verlauf der Spannungen U1, U2 und U3; Darstellung 34: Spannungsimpulse, die am zweiten Ausgang der Speicherspule während der Zeit t2, in der der Umschalter geöffnet ist, entstehen; Darstellung 35: zeitlicher Verlauf der in der Sekundärwicklung des Summierungstransformators erzeugten Wechselspannung Up.
Fig. 4: Blockschaltbild eines erfindungsgemäßen Inverters mit einem gesteuerten Generator getakteter Signale, einem Nebenschlusskondensator und einem Kompensationskondensator.
Fig. 5: Blockschaltbild eines nicht-erfindungsgemäßen Inverters mit einem Rückkopplungskreis.
Fig. 6: Blockschaltbild eines nicht-erfindungsgemäßen Inverters mit einem Rückkopplungskreis, bei welchem eine Zusatzelektrode des angesteuerten Aktors als Rückkopplungselement dient.
Fig. 7: Blockschaltbild eines nicht-erfindungsgemäßen Inverters mit einem geregelten PWM-Wandler.
Fig. 8: Erfindungsgemäßer Inverter mit einem Ultraschallmotor, wobei sowohl der Inverter, als auch der Ultraschallmotor mit einem Lage- bzw. Geschwindigkeitsregler versehen ist.

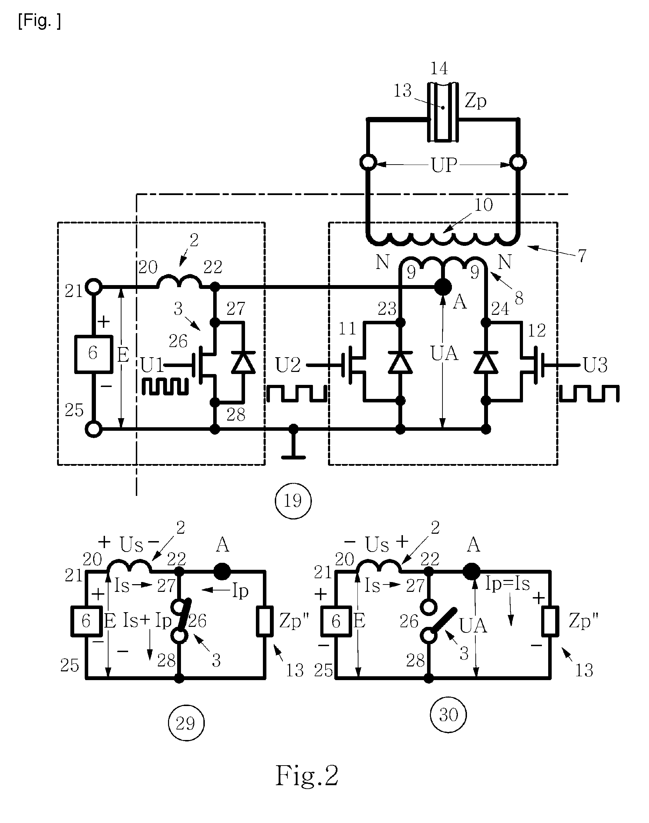

Darstellung 19 von Fig. 2 zeigt das Blockschaltbild eines nicht-erfindungsgemäßen getakteten Inverters für einen Ultraschallmotor.

Der Inverter umfasst eine die Spannung E erzeugende elektrische Gleichspannungsquelle 6, eine Speicherspule 2, einen Umschalter 3 für den Strom Is der Speicherspule 2, einen elektrischen Summierungstransformator 7 mit einer Primärwicklung 8, aufweisend zwei gleiche Sektionen 9, und einer Sekundärwicklung 10. Zwei gegenphasige Ausgänge der Sektionen 9 sind im Punkt A miteinander verbunden, der den Mittelpunkt der Primärwicklung 8 bildet. Zwei weitere Ausgänge der Sektionen 9 sind mit gegenphasig getakteten Schaltern 11 und 12 verbunden.

Die Speicherspule 2 ist mit einem ersten Anschluss 20 mit einem ersten Ausgang 21 der Gleichspannungsquelle 6 und mit einem zweiten Anschluss 22 mit dem mittleren Ausgang A der Primärwicklung 8 des Summierungstransformators 7 verbunden. Zwei Anschlüsse 23, 24 des Summierungstransformators 7 sind über die gegenphasig getakteten Schalter 11, 12 mit einem zweiten Ausgang 25 der Gleichspannungsquelle 6 verbunden.

Der Transformationskoeffizient N des Summierungstransformators 7 wird aus dem Verhältnis der Windungszahl der Sekundärwicklung 10 zur Windungszahl einer der Sektionen 9 der Primärwicklung 8 bestimmt.

Die Ausgänge der Sekundärwicklung 10 des Transformators 7 sind mit einem Ultraschallaktor 13 eines Ultraschallmotors 14 verbunden, der die elektrische Impedanz Zp aufweist, gebildet aus der Eingangskapazität und dem Wirkwiderstand. Die Impedanz Zp" im Punkt A ist gleich Zp/N².

Der Umschalter 3 für den Strom Is der Speicherspule 2 ist als zweipoliger Schalter 26 ausgeführt, dessen erster Anschluss 27 mit dem zweiten Anschluss 22 der Speicherspule 2, und dessen zweiter Anschluss 28 mit dem zweiten Ausgang 25 der Gleichspannungsquelle 6 verbunden ist.

Die Steuerung des Umschalters 3 für den Strom Is der Speicherspule 2 erfolgt mit Hilfe der Spannung U1, die an der Steuerelektrode des Schalters 26 anliegt.

Die Spannung U1 stellt eine Rechteckspannung dar, deren Frequenz zweimal größer als die Arbeitsfrequenz fa des angesteuerten Ultraschallaktors 13 eines Ultraschallmotors 14 ist.

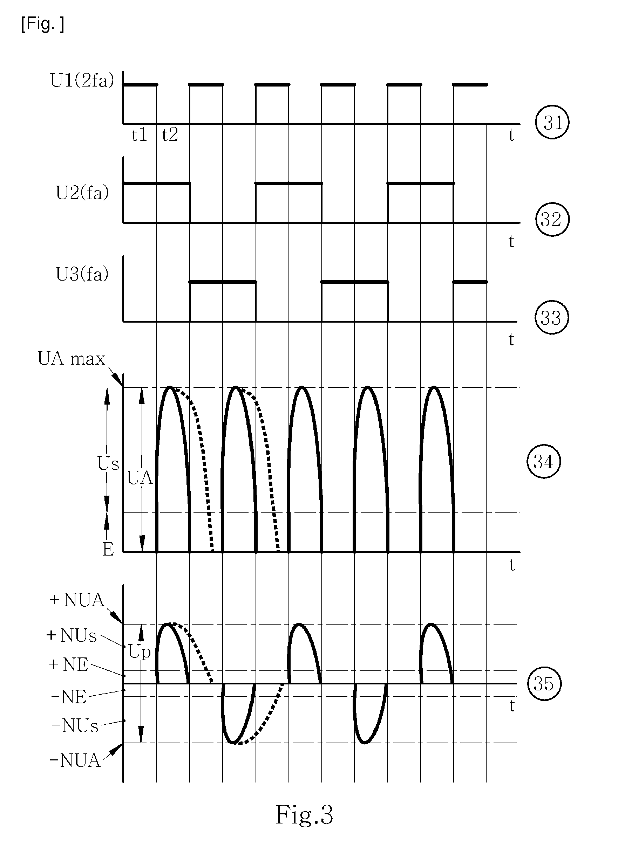

Die Schalter 11, 12 werden durch gegenphasig getaktete elektrische Rechteckspannungen U2, U3 (siehe auch Darstellungen 32 und 33 von Fig. 3) gesteuert, deren Frequenz gleich der Arbeitsfrequenz fa des Ultraschallmotors 14 ist.

Die Darstellungen 29 und 30 von Fig. 2 zeigen Ersatzschaltbilder des Inverters gemäß Darstellung 19 im Betriebszustand zum Zeitpunkt t1 und t2 der Spannung U1 entsprechen (siehe auch Darstellung 31 von Fig. 3).

Über die Zeitdauer t1 liegt an der Steuerelektrode des Schalters 26 der Spannungsimpuls U1 an. Dieser Impuls schließt den Schalter 26 (Darstellung 29 von Fig. 2). Dabei ist die Speicherspule 2 mit ihren Anschlüssen 27 und 28 mit den Ausgängen 21, 25 der Gleichspannungsquelle 6 verbunden.

Durch die Speicherspule 2 beginnt der Ladestrom Is zu fließen, der durch seinen inneren Widerstand, den Widerstand des Schalters 26 und den Innenwiderstand der Gleichspannungsquelle 6 begrenzt wird. Diese Widerstände sind klein, so dass der Ladestrom Is während der Zeit t1 ausreichend groß ist. Während der Zeit t1 speichert die Speicherspule 2 die Energie als Magnetfeld.

Mit dem Beenden des Spannungsimpulses U1 öffnet sich der Schalter 26 (Darstellung 30 von Fig. 2).

Nach dem Öffnen des Schalters 26 versucht die Speicherspule 2 den Strom Is größenmäßig so zu halten, wie er zum Zeitpunkt vor dem Öffnen war. Da die Speicherspule jetzt mit dem größeren Widerstand Zp"=Zp/N² verbunden ist, entsteht in ihr ein Impuls der Selbstinduktionsspannung Us.

Bei geöffneten Schalter 26 ist die Speicherspule 2 mit der Gleichspannungsquelle 6 in Reihe geschaltet, wodurch sich die Spannung UA im Punkt A durch Überlagerung der Spannung E mit der Selbstinduktionsspannung Us ergibt.

Die durchgehenden Linien der Darstellung 34 von Fig. 3 zeigen die Spannungsimpulse UA, die am zweiten Anschluss 22 der Speicherspule 2 während der Zeit t2, in der der Schalter 26 geöffnet ist, entstehen.

Nach dem Öffnen des Schalters 26 bildet die Speicherspule 2 einen Generator für die schnell ansteigende Spannung Us. Die Amplitude der durch die Speicherspule 2 generierten Spannung ist um das 4 bis 7-fache höher als Spannung E. Mit dem Erreichen des Maximalwerts beginnt die Spannung Us zu fallen, da die Speicherspule 2 beginnt, die in ihrem Magnetfeld gespeicherte Energie allmählich an die Last Zp"(Zp) abzugeben.

Die Spannung UA steigt bis zu dem in Darstellung 34 von Fig. 3 gezeigten Wert UA max an. Bei Berücksichtigung der der Spannungshöhe E ist die Spannung U max 5- bis 8-mal größer als die Spannung E.

Das bedeutet, dass im vorschlagsgemäß ausgeführten Inverter die Spannung UA max bedeutend größer ist als die im Inverter nach der DE 698 38 991 T2.

Die Taktung der Sektionen 8 der Primärwicklung 7 mit den Schaltern 10 und 11 mit der Frequenz fa führt dazu, dass in der Sekundärwicklung 8 eine Wechselspannung Up erzeugt wird, welche die in Darstellung 35 von Fig. 3 mit durchgehenden Linien dargestellte Form aufweisen. Die Spannungsamplitude hat den Wert NUA max und die Frequenz Fa.

Im erfindungsgemäßen Inverter erfolgt die notwendige Erhöhung der Spannung Up durch die höhere Amplitude der Selbstinduktionsspannung Us der Speicherspule 2, und nicht mit Hilfe des Summierungstransformators, der einen hohen Transformationskoeffizienten N aufweist.

Durch Erhöhung der Impulsdauer der Spannung U1, d.h. durch Erhöhung der Zeit t1 und Verringerung der Zeit t2, können die Impulse der Spannungen UA und Up, wie in den Darstellungen 34 und 35 von Fig. 3 mit gestrichelten Linien gezeigt, gestreckt werden.

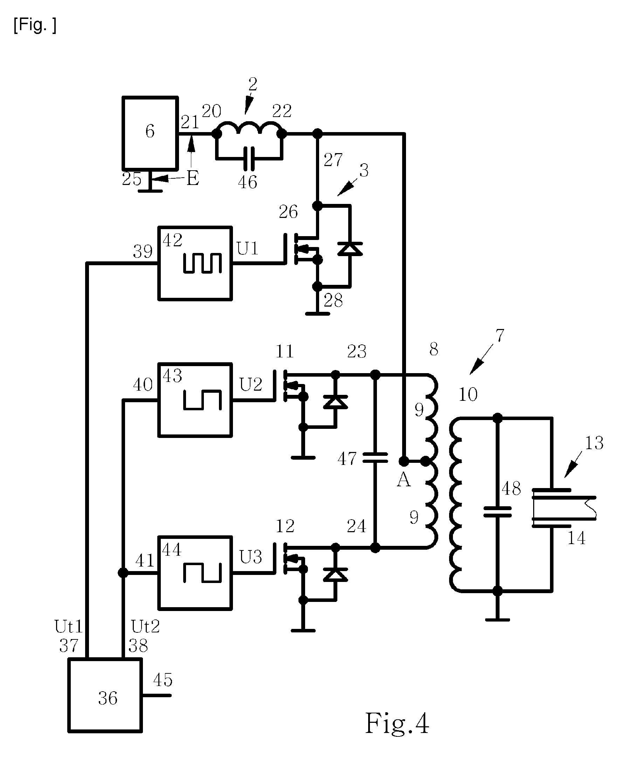

Fig. 4 zeigt das Blockschaltbild einer Ausführungsform des erfindungsgemäßen Inverters. Dieser umfasst einen geregelten Generator 36, an dessen Ausgängen 37, 38 die getakteten Signale Ut1 und Ut2 bereitgestellt sind. Diese Signale werden an die Eingänge 39, 40, 41 der Treiber 42, 43, 44 gelegt und geben die Frequenzen 2fa und fa der Steuerspannungen U1, U2, U3 vor.

Der Generator 36 hat einen Eingang 45, mit dessen Hilfe die Frequenzen fa und 2fa der getakteten Signale Ut1 und Ut2 geregelt werden.

Parallel zur Speicherspule 2 ist ein Kondensator 46 zur Impulsdehnung geschaltet. Dieser Kondensator ermöglicht es, die Spannungsimpulse UA zu strecken.

Überdies ist parallel zur Primärwicklung 8 des Summierungstransformators 7 ein Nebenschlusskondensator 47 geschaltet. Der Nebenschlusskondensator ermöglicht es, die Amplituden der hochfrequenten parasitären Schwingungen der Spannung UA zu verringern.

Außerdem ist parallel zur Sekundärwicklung 10 des Summierungstransformators 7 ein Kompensationskondensator 48 geschaltet, welcher eine Kompensation der parasitären Induktivität des Summierungstransformators 7 bewirkt.

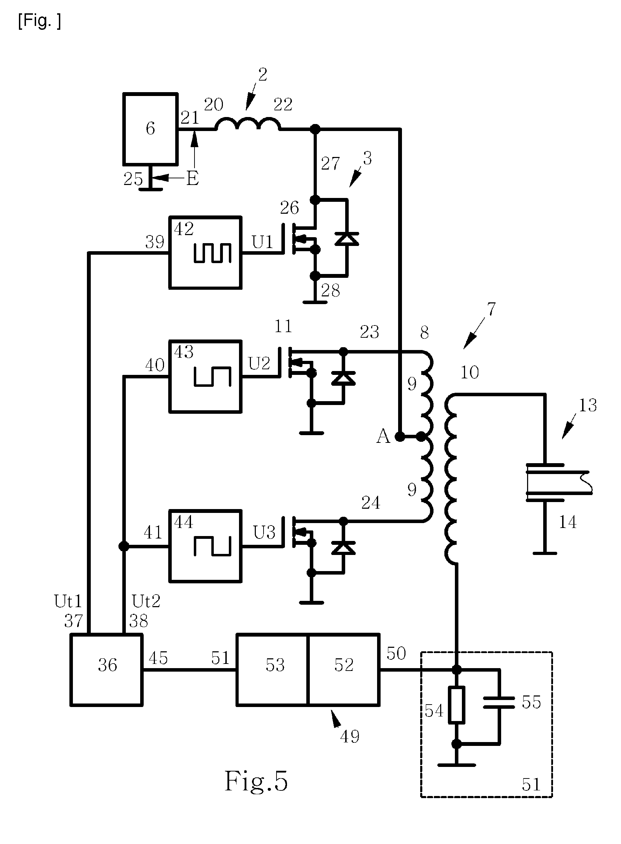

Gemäß dem Blockschaltbild von Fig. 5 umfasst eine weitere nicht-erfindungsgemäße Ausführungsform des Inverters einen Rückkopplungskreis 49, dessen Eingang 50 mit einem Rückkopplungselement 51 und dessen Ausgang mit dem Eingang 45 des Generators 36 verbunden sind.

Der Rückkopplungskreis 49 umfasst den Filter 52 und den Phasenschieber 53.

Das Rückkopplungselement 51 ist als Parallelschaltung eines Widerstands 54 und eines Kondensators 55 ausgeführt. Es kann jedoch ebenso als niedrigohmiger Widerstand 54 oder als Kondensator 55 allein ausgeführt sein.

Der den Generator 36, den Aktor 13 des Ultrasachallmotors 14 und den Rückkopplungskreis 49 mit dem Rückkopplungselement 51 aufweisende getaktete Inverter stellt einen selbsterregenden Generator oder einen sich selbst synchronisierenden Generator dar, in dem eine automatische Frequenznachführung (2fa und fa) der getakteten Signale Ut1, Ut2 und der getakteten Spannungen U1, U2, U3 erfolgt.

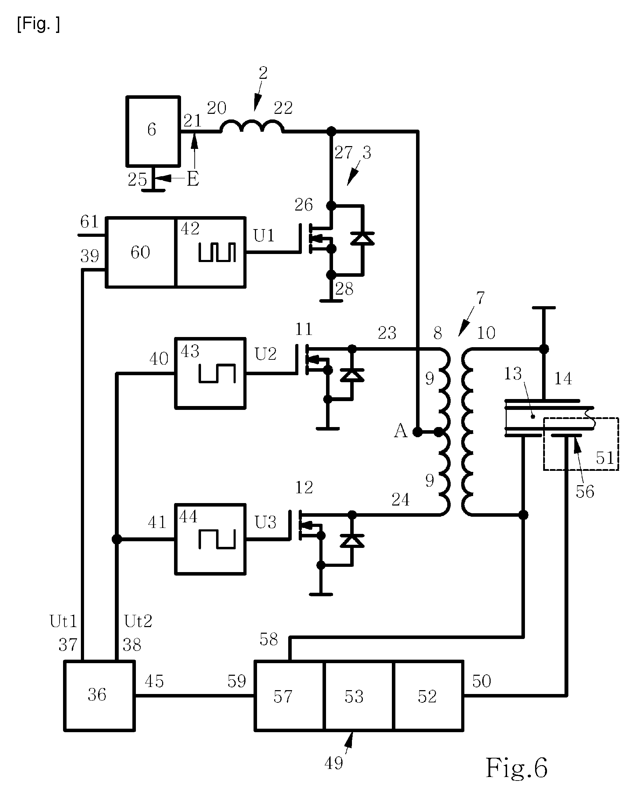

Fig. 6 zeigt in einem Blockschaltbild eine weitere nicht-erfindungsgemäße Ausführungsform eines Inverters, bei welchem eine Hilfselektrode 56 des Aktors 13 als Rückkopplungselement 51 dient. Als Rückkopplungselement 51 kann ebenso ein auf dem Aktor 13 angeordnetes Hilfspiezoelement verwendet werden (in Fig. 6 nicht dargestellt).

Der Rückkopplungskreis 49 weist einen Phasendetektor 57 mit einem Stützeingang 58 und einen Ausgang 59 auf.

Die aus dem getakteten Generator 36, dem Aktor 13 des Ultraschallmotors 14 und dem Rückkopplungskreis 49 mit dem Rückkopplungselement 51 gebildete Schaltung stellt einen PLL Frequenzregler (2fa und fa) der getakteten Signale Ut1, Ut2 und der getakteten Spannungen U1, U2, U3 dar.

Zwischen dem Generator der getakteten Signale 36 und dem Schalter 26 der Speicherspule 2 ist ein PWM-Modulator 60 mit einem Steuereingang 61 geschaltet.

Mit Hilfe des geregelten PWM-Modulators 60 kann die Impulsdauer der Spannung UA (Up) variiert werden. Dadurch ist es möglich, das Erregerniveau des Aktors 13 zu ändern, wodurch die Bewegungsgeschwindigkeit des angetriebenen Elements des Ultraschallmotors 14 gesteuert werden kann.

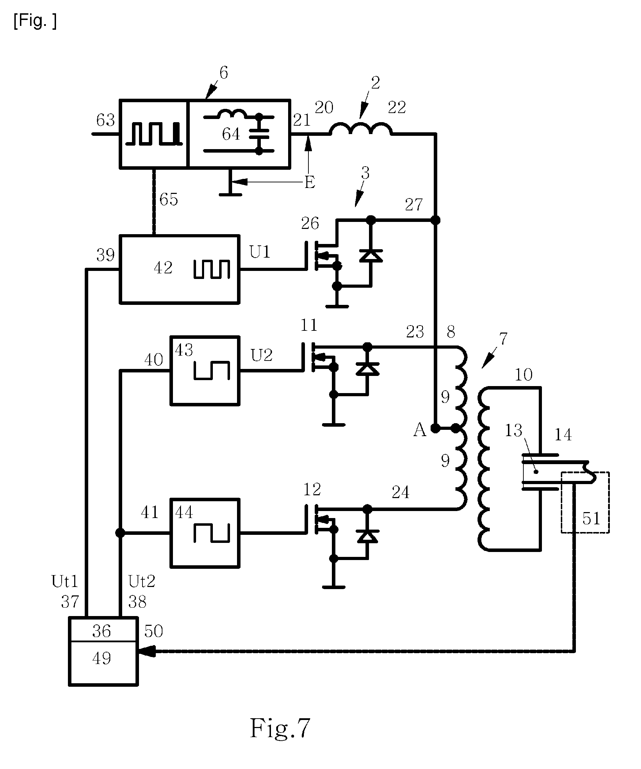

Fig. 7 zeigt das Blockschaltbild einer weiteren nicht-erfindungsgemäßen Ausführungsform des Inverters, bei welcher die Gleichspannungsquelle 6 einen geregelten PWM-Wandler 62 mit einem Steuereingang 63 und einem Filter 64 aufweist. Der PWM-Wandler 62 weist einen Synchronisierungskreis 65 zur Synchronisierung des PWM-Signals mit der Frequenz Fa auf.

Hierbei kann die Höhe der Spannung E variiert werden, wodurch es möglich ist, die Bewegungsgeschwindigkeit des angetriebenen Elements des Ultraschallmotors 14 zu regeln.

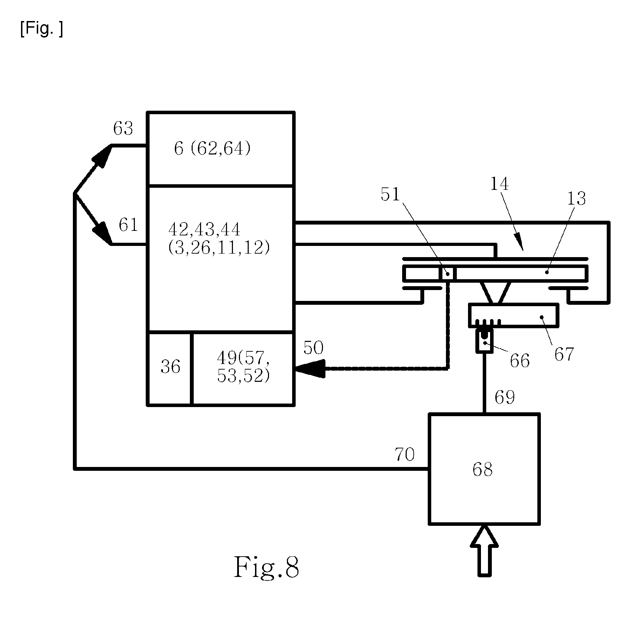

Gemäß Fig. 8 ist der erfindungsgemäße Inverter mit einem Lageregler 68 versehen, und der mit dem Inverter verbundene Ultraschallmotor 14 ist mit einem Lagegeber 66 für ein angetriebenes Element 67 ausgestattet. Ein Eingang 69 des Lagereglers 68 ist mit dem Lagegeber 66 verbunden, und ein Ausgang 70 des Lagereglers 68 ist mit dem Steuereingang 63 des PWM-Wandlers 62 der Gleichspannungsquelle 6 oder mit dem Steuereingang 61 des PWM-Modulators 60 verbunden.

Durch den Einsatz des Lagereglers 68 ist es möglich, die Lage oder die Bewegungsgeschwindigkeit des angetriebenen Elements 67 des Ultraschallmotors 14 genau zu regeln.

Der Lageregler 68, der Generator 36, der Phasendetektor 57, der PWM-Modulator 60, der PWM-Wandler 62 und andere entsprechende Elemente des erfindungsgemäßen Inverters können als programmierbarer Digitalprozessor vom Typ DSP oder FPGA ausgeführt sein.

Der erfindungsgemäße Inverter kann sowohl in Erregervorrichtungen von Aktoren von einphasigen Ultraschallmotoren, als auch als Teil einer Erregervorrichtung von Aktoren von zweiphasigen, dreiphasigen oder mehrphasigen Ultraschallmotoren, bei denen die Last Zp der Sekundärwicklung 10 des Summierungstransformators 7 die Impedanz der Hauptphase dieser Motoren darstellt, eingesetzt werden.

Im erfindungsgemäßen Inverter erfolgt die Erhöhung der durch ihn generierten elektrischen Spannung Up auf Grund der Selbstinduktionsspannung Us der Speicherspule. Dadurch ist es möglich, den Transformationskoeffizienten N des Summierungstransformators zu verringern.

Im Verhältnis zum Inverter entsprechend der DE 698 38 991 T2 kann dabei der Transformationskoeffizient N um das 4 bis 8-fache verringert werden. Durch den kleineren Transformationskoeffizient N ist es möglich, die Störkapazität zwischen Wicklungen des Transformators zu verringern. Dies verringert den durch die Primärwicklung des Transformators fließenden Stroms Ip um ein Mehrfaches. Ein kleinerer Strom verringert die Erwärmung des Transformators, die Erwärmung des Schalters und die Erwärmung der Gleichspannungsquelle.

Die geringere Erwärmung des Inverters bewirkt eine höhere Temperatur- und zeitliche Betriebsstabilität des Inverters und eine höhere Betriebsstabilität des Ultraschallmotors.

Eine geringere Störkapazität des Transformators erhöht die parasitäre Resonanzfrequenz dieser Kapazität mit der der Speicherspule um ein Mehrfaches. Dies verringert wesentlich die Amplitude der hochfrequenten Harmonischen der Ausgangsspannung Up.

All dies erhöht den Wirkungsgrad des vorschlagsgemäß ausgeführten Inverters und eines damit angesteuerten Ultraschallmotors.

## Patentansprüche

1. Getakteter Inverter einer elektrischen Spannung für einen Ultraschallmotor umfassend eine elektrische Gleichspannungsquelle (6), eine Speicherspule (2), einen Umschalter (3) für den Strom Is der Speicherspule (2), einen elektrischen Summierungstransformator (7) mit einer Primärwicklung (8) und einer Sekundärwicklung (10), einen geregelten Generator (36) und zwei gegenphasig getaktete Schalter (11, 12), wobei die Speicherspule (2) über einen ersten Anschluss (20) mit einem ersten Ausgang (21) der elektrischen Gleichspannungsquelle (6) und über einen zweiten Anschluss (22) mit einem Mittelausgang A der Primärwicklung (8) des Summierungstransformators (7) verbunden ist, wobei ein Kondensator (46) parallel zur Speicherspule (2) geschaltet ist, und
zwei Anschlüsse (23, 24) des Summierungstransformators (7) über die gegenphasig getakteten Schalter (11, 12) mit einem zweiten Ausgang (25) der elektrischen Gleichspannungsquelle (6) verbunden sind, wobei der Umschalter (3) als zweipoliger Schalter (26) ausgeführt ist, der mit einem ersten Anschluss (27) mit dem zweiten Anschluss (22) der Speicherspule und mit einem zweiten Anschluss (28) mit dem zweiten Ausgang (25) der elektrischen Gleichspannungsquelle (6) verbunden ist,
wobei die gegenphasig getakteten Schalter (11, 12) durch von dem geregelten Generator (36) bereitgestellte getaktete elektrische Rechteckspannungen U2, U3 gesteuert werden, deren Frequenz gleich der Arbeitsfrequenz fa des Ultraschallmotors ist, und
wobei der Umschalter (3) durch eine von dem geregelten Generator (36) bereitgestellte elektrische Rechteckspannung U1 gesteuert wird, deren Frequenz zweimal größer als die Arbeitsfrequenz fa des Ultraschallmotors ist.

2. Getakteter Inverter nach Anspruch 1, **dadurch gekennzeichnet, dass** ein Nebenschlusskondensator (47) parallel zur Primärwicklung (8) des Summierungstransformators (7) geschaltet ist.

3. Getakteter Inverter nach Anspruch 1, **dadurch gekennzeichnet, dass** ein Kompensationskondensator (48) parallel zur Sekundärwicklung (10) des Summierungstransformators (7) geschaltet ist.

4. Getakteter Inverter nach einem der vorangegangenen Ansprüche, **dadurch gekennzeichnet, dass** der getaktete Inverter einen Rückkopplungskreis (49) aufweist, dessen Eingang (50) mit einem Rückkopplungselement (51) und dessen Ausgang mit einem Eingang (45) des getakteten Generators (36) verbunden ist.

5. Getakteter Inverter nach Anspruch 4, **dadurch gekennzeichnet, dass** das Rückkopplungselement ein Wirkwiderstand (54) oder ein Kondensator (55) ist, und der Wirkwiderstand und/oder der Kondensator parallel oder in Reihe mit der Sekundärwicklung (10) des Summierungstransformators (7) geschaltet sind/ist.

6. Getakteter Inverter nach Anspruch 4, **dadurch gekennzeichnet, dass** das Rückkopplungselement (51) eine Hilfselektrode (56) oder eine freie Elektrode eines Aktors eines Ultraschallmotors oder ein Hilfspiezoelement ist.

7. Getakteter Inverter nach einem der Ansprüche 5 oder 6, **dadurch gekennzeichnet, dass** ein aus dem getakteten Inverter, einem Ultraschallmotor und dem Rückkopplungskreis (49) mit dem Rückkopplungselement (51) gebildetes System ein PLL-Regler für die Frequenz der getakteten Spannung ist.

8. Getakteter Inverter nach einem der Ansprüche 3 bis 7, **dadurch gekennzeichnet, dass** zwischen dem Generator (36) der getakteten Signale und dem Eingang des Schalters (26) der Speicherspule (2) ein geregelter PWM-Modulator (60) geschaltet ist.

9. Getakteter Inverter nach einem der vorangegangenen Ansprüche, **dadurch gekennzeichnet, dass** die elektrische Gleichspannungsquelle (6) einen geregelten PWM-Modulator (62) aufweist.

10. Getakteter Inverter nach Anspruch 8 oder 9, **dadurch gekennzeichnet, dass** der getaktete Inverter einen Geber (68) für die Lage oder für die Bewegungsgeschwindigkeit umfasst und ein mit dem getakteten Inverter verbundener Ultraschallmotor (14) ebenfalls einen Geber für die Lage (66) oder einen Geber für die Bewegungsgeschwindigkeit (67) umfasst, wobei der Eingang (69) des Gebers (68) des getakteten Inverters mit dem Geber (66, 67) des Ultraschallmotors (14) verbunden ist, und der Ausgang das Gebers (68) des getakteten Inverters mit einem Steuereingang (63) des PWM-Wandlers (62) der elektrischen Spannungsquelle (6) oder mit einem Steuereingang (61) des PWM-Modulators (60) verbunden ist.

11. Ultraschallmotor mit einem getakteten Inverter nach einem der vorangegangenen Ansprüche.

## Claims

1. Clocked inverter of an electrical voltage for an ultrasonic motor, the inverter comprising an electrical direct voltage source (6), a storage coil (2), a switch for the current is of the storage coil (2), an electrical summation transformer (7) with a primary winding (8) and a secondary winding (10), a controlled generator (36), and two switches (11, 12) clocked in antiphase,
wherein
the storage coil (2) is connected to a first output (21) of the electrical direct voltage source (6) via a first connection (20) and to a middle output A of the primary winding (8) of the summation transformer (7) via a second connection (22), wherein a capacitor (46) is connected parallel to the primary winding (8), and
two connections (23, 24) of the summation transformer (7) are connected to a second output (25) of the electrical direct voltage source (6) via the switches (11, 12) clocked in antiphase,
wherein the switch (3) is designed as a two-channel switch (26) which, with a first connection (27), is connected to the second connection (22) of the storage coil and, with a second connection (28), is connected to the second output (25) of the electrical direct voltage source (6),
wherein the switches (11, 12) clocked in antiphase are controlled by clocked electrical rectangular voltages U2, U3 which are provided by the controlled generator (36), wherein the frequency of the electrical rectangular voltages U2, U3 is equal to the working frequency fa of the ultrasonic motor, and
wherein the switch (3) is controlled by a clocked electrical rectangular voltage U1 being provided by the controlled generator (36), wherein the frequency of the electrical rectangular voltage U1 is two times bigger than the working frequency fa of the ultrasonic motor.

2. Clocked inverter according to claim 1, **characterized in that** a shunt capacitor (47) is connected parallel to the primary winding (8) of the summation transformer (7).

3. Clocked inverter according to claim 1, **characterized in that** a compensating capacitor (48) is connected parallel to the secondary winding (10) of the summation transformer (7).

4. Clocked inverter according to one of the preceding claims, **characterized in that** the clocked inverter comprises a feedback circuit (49), the input (50) of which feedback circuit (49) being connected with a feedback element (51) and the output of which feedback circuit (49) being connected with an input (45) of the clocked generator (36).

5. Clocked inverter according to claim 4, **characterized in that** the feedback element is an effective resistance (54) or a capacitor (55), and the effective resistance and/or capacitor are/is connected parallel or in series with the secondary winding (10) of the summation transformer (7).

6. Clocked inverter according to claim 4, **characterized in that** the feedback element (51) is an auxiliary electrode (56), or a free electrode of an actor of an ultrasonic motor, or an auxiliary piezoelement.

7. Clocked inverter according to claim 5 or 6, **characterized in that** a system formed of the clocked inverter, an ultrasonic motor, and the feedback circuit (49) with the feedback element (51) is a PLL-controller for the frequency of the clocked voltage.

8. Clocked inverter according to one of the claims 3 to 7, **characterized in that** a controlled PWM-modulator (60) is connected between the generator (46) of the clocked signals and the input of the switch (26) of the storage coil (2).

9. Clocked inverter according to one of the preceding claims, **characterized in that** the electrical direct voltage source (6) comprises a controlled PWM-modulator (62).

10. Clocked inverter according to claim 8 or 9, **characterized in that** the clocked inverter comprises a sensor (68) for the position or for the velocity of movement, and **in that** an ultrasonic motor (14) which is connected with the clocked inverter also comprises a sensor (66) for the velocity of movement (67), wherein the input (69) of the sensor (68) of the clocked inverter is connected to the sensor (66, 67) of the ultrasonic motor (14), and the output of the sensor (68) of the clocked inverter is connected to a control input (63) of the PWM-modulator (62) of the electrical voltage source (6) or to a control input (61) of the PWM-modulator (60).

11. Ultrasonic motor with a clocked inverter according to one of the preceding claims.

## Revendications

1. Onduleur cadencé d'une tension électrique pour un moteur à ultrasons comprenant une source électrique de tension continue (6), une bobine d'accumulation (2), un inverseur (3) pour le courant is de la bobine d'accumulation (2), un transformateur totaliseur électrique (7) avec un enroulement primaire (8) et un enroulement secondaire (10), un générateur (36) régulé et deux commutateurs cadencés en opposition de phase (11, 12),
dans lequel
la bobine d'accumulation (2) est reliée via une première connexion (20) à une première sortie (21) de la source électrique de tension continue (6) et via une deuxième connexion (22) à une sortie centrale A de l'enroulement primaire (8) du transformateur totaliseur (7), dans lequel un condensateur (46) est couplé parallèlement à la bobine d'accumulation (2), et
deux connexions (23, 24) du transformateur totaliseur (7) étant reliées via les commutateurs cadencés en opposition de phase (11, 12) à une deuxième sortie (25) de la source électrique de tension continue (6),
dans lequel l'inverseur (3) est réalisé en tant que commutateur bipolaire (26), lequel est relié par une première connexion (27) à la deuxième connexion (22) de la bobine d'accumulation, et par une deuxième connexion (28) à la deuxième sortie (25) de la source électrique de tension continue (6),
dans lequel les commutateurs cadencés en opposition de phase (11, 12) sont commandés par des tensions électriques carrées cadencées U2, U3 mises à disposition par le générateur (36) régulé, dont la fréquence est égale à la fréquence de travail fa du moteur à ultrasons, et
dans lequel l'inverseur (3) est commandé par une tension électrique carrée U1 mise à disposition par le générateur régulé (36), dont la fréquence est deux fois plus importante que la fréquence de travail fa du moteur à ultrasons.

2. Onduleur cadencé selon la revendication 1, **caractérisé en ce qu'**un condensateur en dérivation (47) est couplé parallèlement à l'enroulement primaire (8) du transformateur totaliseur (7).

3. Onduleur cadencé selon la revendication 1, **caractérisé en ce qu'**un condensateur de compensation (48) est couplé parallèlement à l'enroulement secondaire (10) du transformateur totaliseur (7).

4. Onduleur cadencé selon l'une des revendications précédentes, **caractérisé en ce que** l'onduleur cadencé présente un circuit de contre-réaction dont l'entrée (50) est reliée à un élément de contre-réaction (51) et dont la sortie est reliée à une entrée (45) du générateur cadencé (36).

5. Onduleur cadencé selon la revendication 4, **caractérisé en ce que** l'élément de contre-réaction est une résistance active (54) ou un condensateur (55), et **en ce que** la résistance active et/ou le condensateur est/sont couplé(s) parallèlement ou en série avec l'enroulement secondaire (10) du transformateur totaliseur (7).

6. Onduleur cadencé selon la revendication 4, **caractérisé en ce que** l'élément de contre-réaction (51) est une électrode auxiliaire (56) ou une électrode libre d'un actionneur d'un moteur à ultrasons ou un élément piézoélectrique auxiliaire.

7. Onduleur cadencé selon l'une des revendications 5 ou 6, **caractérisé en ce qu'**un système formé par l'onduleur cadencé, un moteur à ultrasons et le circuit de contre-réaction (49) avec l'élément de contre-réaction (51) est un régulateur PLL pour la fréquence de la tension cadencée.

8. Onduleur cadencé selon l'une des revendications 3 à 7, **caractérisé en ce qu'**un modulateur PWM (60) régulé est couplé entre le générateur (36) des signaux cadencés et l'entrée du commutateur (26) de la bobine d'accumulation (2).

9. Onduleur cadencé selon l'une des revendications précédentes, **caractérisé en ce que** la source électrique de tension continue (6) présente un modulateur PWM (62) régulé.

10. Onduleur cadencé selon la revendication 8 ou 9, **caractérisé en ce que** l'onduleur cadencé comprend un détecteur (68) pour la position ou pour la vitesse de déplacement et **en ce qu'**un moteur à ultrasons (14) relié à l'onduleur cadencé comprend également un détecteur pour la position (66) ou un détecteur pour la vitesse de déplacement (67), dans lequel l'entrée (69) du transmetteur (68) de l'onduleur cadencé est reliée au détecteur (66, 67) du moteur à ultrasons (14), et la sortie du détecteur (68) de l'onduleur cadencé étant reliée à une entrée de commande (63) du convertisseur PWM (62) de la source électrique de tension continue (6) ou à une entrée de commande (61) du modulateur PWM (60).

11. Moteur à ultrasons avec un onduleur cadencé selon l'une des revendications précédentes.
